# EUROPÄISCHE PATENTSCHRIFT

(11) **EP 1 083 042 B1**
(45) Veröffentlichungstag und Bekanntmachung des Hinweises auf die Patenterteilung: **13.07.2005**
(21) Anmeldenummer: 00118823.4
(22) Anmeldetag: 31.08.2000
(51) Int. Cl.: B29C 65/18, B29C 65/74, B65B 11/04

(54) **Vorrichtung zum Schweissen und/oder Trennschweissen von Folien**
Apparatus for welding and/or welding and cutting of films
Appareil pour souder et/ou souder et couper des films

(30) Priorität: 10.09.1999 DE 19943492
(43) Veröffentlichungstag der Anmeldung: 14.03.2001
(73) Patentinhaber: Firma Skinetta Pac-Systeme Kiener GmbH & Co., 87724 Ottobeuren (DE)
(72) Erfinder: Kelly, David, 87634 Obergünzburg (DE)
(74) Vertreter: Pfister, Helmut, Dipl.-Ing.

(56) Entgegenhaltungen:
- EP-A- 0 941 933
- DE-A- 3 409 702
- DE-B- 2 245 394
- FR-A- 1 359 332
- FR-A- 2 690 412
- US-A- 2 621 704
- US-A- 2 650 183
- US-A- 2 796 913
- US-A- 2 960 147
- US-A- 3 015 601
- US-A- 3 536 567
- US-A- 3 993 529
- US-A- 4 768 326

## Beschreibung

Die Erfindung betrifft eine Vorrichtung zum Schweißen zweier Folien, mit einer beheizten Siegel- oder Schweißeinrichtung, die mit einem Gegenwerkzeug zusammenwirkt, wobei die Folien zwischen der Siegel- oder Schweißeinrichtung und dem Gegenwerkzeug angeordnet sind und die Siegel- oder Schweißeinrichtung und das Gegenwerkzeug zueinander relativ beweglich ausgebildet sind.

Vorrichtungen der vorstehend angegebenen Gattung sind bekannt. Die Siegel- oder Schweißeinrichtung wird dabei in der Regel von unten nach oben bewegt, während sich das Gegenwerkzeug von oben nach unten verschiebt und insbesondere in diejenigen Einrichtungen integriert ist, die zur Schlingenbildung erforderlich sind.

Es wird bemerkt, daß es für die vorstehend beschriebene Vorrichtung und auch für die Erfindung von untergeordneter Bedeutung ist, ob die Einrichtung, die die Folienenden untereinander verbindet als Siegeleinrichtung oder als Schweißeinrichtung ausgebildet ist, so daß in diesem Zusammenhang ohne weiteres die eine Verfahrensweise oder Ausbildung gegen die andere Verfahrensweise oder Ausbildung austauschbar ist.

Ebenfalls ist es für die Anwendung der Erfindung nicht wesentlich, ob die Vorrichtung nun zum Verschweißen zweier Folien oder zweier Folienenden oder der beiden Enden an einer Folie und so weiter eingesetzt wird. Es ist auch möglich, mit der Vorrichtung die beiden Enden oder zwei Bereiche der gleichen Folie, zum Beispiel zu einem Schlauch oder dergleichen, zu verschweißen, wobei es sich hierbei zum Beispiel um Folienstücke im Sinne der Erfindung handeln kann, um den erfindungsgemäßen Effekt auszunützen. Im Sinne der Erfindung ist auch das Verschweißen von mehr als zwei Folien/Folienstücke möglich.

Bei den bekannten Vorrichtungen besteht die Schweiß- oder Siegelvorrichtung aus einem Heizschwert, das auf seiner oberen Kante dachartig ausgestaltet ist. Dieses Heizschwert hat die Aufgabe beim Auftreffen auf die Folien eine Durchtrennung der Folien zu bewirken und gleichzeitig die durch die Durchtrennung entstandenen Folienenden jeweils miteinander zu verschweißen. Dabei sind einmal die Folienenden, die die Schlinge bilden zu verschweißen, so daß ein endloses Gebilde entsteht. Zum anderen sind aber auch die Folienenden, die von oben und von unten zugeführt sind, nach der Abtrennung der Schlinge wieder miteinander zu verbinden, so daß ein Vorhang entsteht und sich das Arbeitsspiel wiederholen kann. Solche eingangs beschriebenen Vorrichtungen sind zum Beispiel bei Banderoliermaschinen bekannt.

Zum Verschweißen von PE-Folien sind in der Regel Temperaturen von ca. 250 °C notwendig. Das Heizschwert beziehungsweise der Heizspiegel ist dauerhaft aufgeheizt oder es ist vorgesehen, diese Einrichtungen kurzfristig zu erhitzen, wobei die vergleichsweise große Masse des Heizschwertes eine entsprechende thermische Trägheit nach sich zieht. Der Versiegelungsvorgang nimmt dadurch einige Zeit in Anspruch.

Bei bekannten Vorrichtungen ist für das Versiegeln eine Zeitspanne von etwa 0.5 sek. erforderlich, wobei die Hälfte dieser Zeit für das Aufheizen und die andere Hälfte für das Abkühlen, insbesondere für das Verkleben der Folienenden vorgesehen und notwendig ist.

Wenn zum Beispiel eine Banderoliermaschine der in Rede stehenden Art 35 Arbeitstakte pro Minute ausführt, verbleibt für einen Arbeitstakt eine Zeitspanne von 1,71 sek.. Die Zeitspanne für den vollständigen Schweißvorgang beträgt somit ca. ein Drittel der Gesamtzeit.

Das Heizschwert, das bei derartigen Maschinen Verwendung findet, ist ferner eine Gefahrenquelle wegen Verletzungen, da es in der Regel dauernd eine Temperatur über 200°C besitzt.

Bei den bekannten Maschinen wird das Heizschwert, wie schon ausgeführt, beim Arbeitsvorgang von unten nach oben geführt. Im oberen Teil der Bewegung wirkt das Heizschwert auf die Folien ein. Die nicht unbeträchtliche Masse des Heizschwertes und der zugehörigen Einrichtungen erfordert einen ausreichend leistungsfähigen Antrieb, dem die entsprechenden Maschinenteile angepaßt sein müssen. Des Weiteren sind bei den bekannten Maschinen Mittel zum Ausrichten beziehungsweise Festlegen der Folien übereinander notwendig. Hierzu werden entsprechende Straffziehelemente oder Klemmvorrichtungen eingesetzt, die bei dem Schweißvorgang, der periodisch erfolgt, entsprechend einzuplanen sind und natürlich auch Zeit kosten. Darüberhinaus ist der Einsatz dieser zusätzlichen Elemente entsprechend aufwendig und bedingt auch zusätzlichen Platz, der nur schwer zur Verfügung zu stellen ist, insbesondere weil die Verbindungsnaht, zum Beispiel an dem fertig verpackten Produkt möglichst nah am Produkt anzuordnen sein soll.

Die Druckschrift FR-A-1 359 332 zeigt eine Vorrichtung zum Schweißen, von dem die vorliegende Patentanmeldung ausgeht. Die in der Druckschrift gezeigte Vorrichtung besitzt ein Gegenwerkzeug, welches an der der Folie zugewandten Vorderseite elastisches Material aufweist. Das elastische Material weicht beim Zusammenfahren von Siegel- oder Schweißeinrichtung und Gegenwerkzeug zumindest teilweise elastisch zurück.

Der Erfindung liegt die Aufgabe zugrunde, eine Vorrichtung zum Schweißen von Folien/Folienstücken der vorstehend beschriebenen Gattung dahingehend zu verbessern, daß eine höhere Taktfrequenz erhalten wird.

Die Erfindung geht dabei von einer Vorrichtung der eingangs angegebenen Gattung aus, bei der das Gegenwerkzeug an der der Folie zugewandten Vorderseite elastisches Material aufweist und/oder die der Folie zugewandte Vorderfläche des Gegenwerkzeuges elastisch ausgebildet ist, und das elastische Material beziehungsweise die Vorderfläche beim Zusammenfahren von Siegel- oder Schweißeinrichtung und Gegenwerkzeug zumindest teilweise elastisch zurückzuweichen, und das Gegenwerkzeug wenigstens ein Mittel aufweist, durch das sich örtlich der Grad der Elastizität des Gegenwerkzeuges und/oder der der Folie zugewandten Vorderfläche des Gegenwerkzeuges verändert, die sich dadurch auszeichnet, daß beidseitig seitlich neben dem oder den Mitteln Bereiche vorgesehen sind, die der Verschweißung der Folien dienen und neben diesen Bereichen vorstehende Wülste angeordnet sind, derart, daß sie die Folien im Zusammenwirken mit der Siegel- oder Schweißeinrichtung festklemmen.

Durch die vorgeschlagene Ausgestaltung der Vorrichtung wird erreicht, daß beim Heranführen des Gegenwerkzeuges, welches für den Schweißvorgang notwendig ist, auch gleichzeitig beziehungsweise davor oder hernach durch die gleiche Bewegung ein Festlegen der Folien übereinander erfolgt. Durch das Zusammenfassen dieser beiden Funktionen (Festlegen der Folien und Heranführen des Gegenwerkzeuges für den Schweißvorgang) wird an dem periodisch ablaufenden Schweißvorgang Zeit eingespart und prinzipiell die Möglichkeit eröffnet, mit höheren Taktfrequenzen die Vorrichtung einzusetzen.

Dabei wird die Vorrichtung erfindungsgmäß zum Schweißen, also beim Verbinden von zwei Folienstücken eingesetzt, ohne dabei die Folie hierbei zerstören zu müssen. Mit der Erfindung ist in gleicher Weise aber auch ein Trennschweißen möglich, also ein Vorgang, bei welchem die Folie durchtrennt wird. Eine solche Ausgestaltung ist bei einer bevorzugten Weiterentwicklung der Erfindung vorgesehen.

Um die Folien miteinander zu verbinden, ist vorgesehen, daß das Gegenwerkzeug und die Siegel- beziehungsweise Schweißeinrichtung relativ zueinander beweglich ausgebildet sind. Durch die elastische Ausgestaltung der der Folie zugewandten Seite des Gegenwerkzeuges wird sichergestellt, daß unabhängig von der exakten Dicke der Folien oder der relativen Position der Siegel- beziehungsweise Schweißeinrichtung zum Gegenwerkzeug immer ein ausreichender Druck oder Kraft auf die Folie eingeprägt wird, um die gewünschte Funktion, zum Beispiel das Schweißen oder Trennschweißen zu erreichen. Im Stand der Technik war hierzu ein aufwendiges Einstellen der genauen Endposition der beweglichen Teile zueinander notwendig, um insbesondere zu vermeiden, daß die Folien durch die sich bewegenden Teile abgeschert werden ohne daß ein Trennschweißen erfolgte. Umgekehrt war eine Einstellung notwendig die sicherstellte, daß kein Spalt zwischen dem Gegenwerkzeug und der Siegeleinrichtung verbleibt, welcher ein Verbinden der Folien unmöglich machen würde. Durch den konstruktiven Vorteil, wie vorgeschildert, wird damit noch ein weiterer Vorteil erreicht, nämlich auf die ansonsten hierfür aufwendigen Justierarbeiten, insbesondere bei einem Wechsel von Folie oder bei Wartungsarbeiten, kann verzichtet werden.

In der Erfindung ist vorgesehen, daß das Gegenwerkzeug Mittel aufweist, durch die sich der Grad der Elastizität des Gegenwerkzeuges und/oder der Vorderfläche verändert, insbesondere erniedrigt wird, derart, daß dieser Bereich beim Zusammenführen von Siegel- oder Schweißeinrichtung und Gegenwerkzeug einen erhöhten Druck auf die Folie ausübt. Durch das Zusammenführen von Siegel- beziehungsweise Schweißeinrichtung und Gegenwerkzeug weicht das Material, aufgrund seiner Elastizität, an dem Gegenwerkzeug zurück. Dieser Federeffekt ergibt, daß eine im Wesentlichen bestimmbare Kraft zwischen dem Gegenwerkzeug und der Siegel- beziehungsweise Schweißeinrichtung resultiert. Diese Kraft wird bei der erfindungsgemäßen Entwicklung örtlich verändert, um damit spezielle Effekte zu erreichen, zum Beispiel gewisse Bereiche mit einem erhöhten Druck zu beaufschlagen, um zum einen einen besseren thermischen Kontakt aber auch entsprechende Scherkräfte auf die Folie einwirken zu lassen, um zum Beispiel eine Trennung leichter beziehungsweise schneller zu erreichen. Es kann aber auch eine erhöhte Elastizität also daraus resultieren eine Verringerung der Anpreßkräfte vorgesehen werden, zum Beispiel um trotz beheizter Fläche kein Anliegen oder Versiegeln der Folien zu erreichen. Der vorbeschriebene Effekt wird aber insbesondere dafür eingesetzt Bereiche zu schaffen, die nicht nur Schweißen, sondern auch für eine Trennschweißung dienen. Als Mittel für die Veränderung der Elastizität sind zum Beispiel Einlagen, Wülste, Auflagen oder Schwächungen in dem elastischen Material vorgesehen.

In einer bevorzugten Ausgestaltung der Erfindung ist vorgesehen, daß das Gegenwerkzeug leistenartig ausgebildet ist und die Mittel zur Veränderung der Elastizität längs der Leiste angeordnet sind. Das leistenartig ausgestaltete Gegenwerkzeug ist dabei in Förderrichtung quer zur Folienbahn orientiert und gegebenenfalls rechtwinklig hierzu bewegbar. Die mit dem Gegenwerkzeug zusammenwirkende Siegel- beziehungsweise Schweißeinrichtung ist entsprechend positioniert und gegebenenfalls ebenfalls relativ beweglich oder stillstehend ausgebildet.

Bei der Erfindung wird das Verschweißen und/oder Durchtrennen der Folienenden im wesentlichen durch eine entsprechende Ausgestaltung des Gegenwerkzeugs erhalten. Dabei ist insbesondere vorgesehen, daß die Siegel- oder Schweißeinrichtung antriebslos angeordnet ist und nur das Gegenwerkzeug gegen die Siegel- oder Schweißeinrichtung geführt ist.

Durch die Erfindung werden beträchtliche Vorteile erhalten. Neben dem Umstand, daß die Siegel- oder Schweißeinrichtung nicht mehr bewegt wird, also ortsfest angeordnet ist, wodurch deren Antrieb enfällt, wird erreicht, daß durch die Ausgestaltung der aus elastischen Material bestehenden Leiste die verschiedenen erforderlichen Arbeitsabläufe sinngemäß nacheinander oder gleichzeitig erfolgen beziehungsweise auch in einer Weise, wobei die einzelnen Arbeitsabläufe einander zeitlich überschneiden, ohne das Endergebnis nachteilig zu beeinträchtigen. Zum Beispiel ist vorgesehen, daß das Trennschweißen bereits dann bereits dann erfolgen kann, wenn die Folien gerade geklemmt werden. Im Ergebnis ist der Prozeßablauf beschleunigbar.

Der Silikon-Kautschuk den die Erfindung zum Beispiel als elastisches Material verwendet, ist noch bei den erforderlichen Temperaturen bis ca. 300° C funktionsfähig und hat auch eine hinreichende Lebensdauer. Insbesondere ist er ausreichend elastisch, so daß durch die bloße Gegeneinanderbewegung des Gegenwerkzeuges gegen die Siegel- oder Schweißeinrichtung der angestrebte Erfolg erreicht wird.

Die Erfindung benützt vorzugsweise eine Siegel- oder Schweißeinrichtung, die so ausgestaltet ist, daß sie jeweils kurzfristig auf die erforderliche Schweiß- beziehungsweise Trenntemperatur gebracht wird, dann aber ausreichend schnell abkühlt, um die Siegel- beziehungsweise Schweißnähte haltbar zu machen. Die eigentliche Heizleiste befindet sich in der Mitte der Siegel- oder Schweißeinrichtung und besitzt eine solche Breite, daß sie mit den Bereichen zur Trennung und zum Verschweißen des Gegenwerkzeuges zusammenwirken kann.

Die Heizleiste ist bei einer bevorzugten Ausgestaltung der Erfindung von mehreren Schichten aus Keramik und/oder Kunststoffmaterial umgeben, so daß nur eine verhältnismäßig geringe thermische Masse erhalten wird. Die thermische Trägheit des Systems wird dadurch stark reduziert.

Bei der erfindungsgemäßen Anordnung wird für das Aufheizen nur eine Zeit von bis zu 0,4 sek. benötigt. Bevorzugt wird ein Stromimpuls von 0,05 bis 0,15 sek. eingesetzt, um die Heizleiste auf Bearbeitungstemperatur aufzuheizen. In ungefähr der gleichen Zeit kühlt die Heizleiste dabei wieder ab. Die starke Reduzierung der Zeit, die für das Versiegeln notwendig ist, ergibt eine wesentliche Erhöhung der Taktzahl der Maschine pro Minute. Um diese schnellen Aufheiz- beziehungsweise Abkühlzeiten zu realisieren, werden erfindungsgemäß spezielle Ausgestaltungen an der Siegel- beziehungsweise Schweißeinheit vorgeschlagen.

In einer weiteren Ausführung der Erfindung ist vorgesehen, daß die Konturen der Wirkfläche des Gegenwerkzeuges und der Siegel- oder Schweißeinrichtung einander derart angepaßt sind, daß der Bereich zum Festklemmen gegenüber den anderen Bereichen derart vorsteht, daß dieser Bereich vor den anderen wirksam ist.

Bei dieser bevorzugten Ausgestaltung der Erfindung drückt das Gegenwerkzeug die beiden aufeinanderliegenden Folien gegen die Siegel- oder Schweißeinrichtung. Dabei wird zunächst wegen des Vorstehens der Bereiche zum Festklemmen eine Klemmung der Folien, also eine Fixierung erreicht. Insbesondere schlägt die Erfindung hier vor, daß zum Zeitpunkt des Fixierens der Folie durch die Klemmbereiche praktisch noch kein Kontakt des Bereiches zum Abtrennen mit der Heizeinrichtung erhalten ist. Da aber das Gegenwerkzeug in Bewegung ist, erfolgt unmittelbar nach dem Klemmvorgang der Kontakt des Trennbereiches des Gegenwerkzeuges mit den beiden aufeinanderliegenden Folien, die hierdurch gegen die Heizeinrichtung gedrückt werden.

Zu diesem Zweck besitzt die Leiste aus elastischem Silikon-Kautschuk oder dergleichen rechtwinklig zur Förderrichtung des Gutes eine vorstehende Rippe, die die Folien gegen die beheizte Siegel- oder Schweißeinrichtung drückt. Diese Rippe wirkt als Mittel zur Veränderung der Elastizität. Dabei ist es nicht notwendig, daß die Siegel- oder Schweißeinrichtung keilartig ausgebildet ist, wie diese eingangs beim Stande der Technik beschrieben worden ist. Die Siegel- oder Schweißeinrichtung kann beispielsweise in diesem Bereich eben ausgebildet sein.

Die vorspringende Rippe an der Silikon-Kautschuk-Leiste ist vorzugsweise im Querschnitt keilartig ausgebildet, so daß das Verschweißen und Trennen der Folien nur in einem verhältnismäßig kleinen Bereich erfolgt. Die erforderliche Wärme, die auf die Folien einwirken muß, bleibt dabei gering.

Nach einem weiteren Merkmal der Erfindung sind zu beiden Seiten der Rippe im wesentlichen ebene Flächen angeordnet, die den Bereich der Verschweißung oder Versiegelung bilden. Beim Vorschubvorgang werden also, nach dem Durchtrennen der beiden Folien, die Folien gegen die Heizleiste gedrückt. Beide Vorgänge erfolgen zeitlich dicht aufeinander, überlappend oder gleichzeitig und zwar bedingt durch den Vorschub des Gegenwerkzeuges und die Elastizität der Silikon-Kautschuk-Leiste.

Die kurze Aufheizphase der Heizeinrichtung geht zu diesem Zeitpunkt des Verfahrensablaufes bereits wieder in eine Abkühlphase über, da die Temperatur zum Versiegeln etwas niedriger ist als die Temperatur zum Durchtrennen. Hierbei ist es günstig, daß die Heizleiste eine geringe thermische Trägheit aufweist, das heißt, der Heizleiter verhältnismäßig schmal und gering an Masse gebaut ist, um nicht zu viel Material zu erwärmen. Des Weiteren ist es günstig, wenn an dem Träger der Heizleiste eine Kühlung, insbesondere eine Wasserkühlung für die Heizleiste vorgesehen ist, durch welche das Absinken der Temperatur nach dem Versiegeln weiter beschleunigt werden kann.

Die Bereiche zur Verschweißung oder Versiegelung an der Silikon-Kautschuk-Leiste, die beidseitig der Rippe für die Durchtrennung verlaufen, sind vorzugsweise im wesentlichen eben.

Außerhalb der Bereiche zum Verschweißen oder Versiegeln sind vorzugsweise vorstehende Wülste vorgesehen, die die Folien beim zusammenwirken mit der Siegel- oder Schweißeinrichtung festklemmen.

Die Siegel- oder Schweißvorrichtung kann vorzugsweise Ausnehmungen aufweisen, die mit den Bereichen zur Klemmung am Gegenwerkzeug zusammenwirken. Insbesondere sind diese Ausnehmungen, die mit den Wülsten zusammenarbeiten, diesen Wülsten nur teilweise angepaßt. Dadurch wird eine Verformung der Wülste erreicht und eine Verbesserung der Klemmwirkung. Störungen durch kleinste Fremdkörper können sich nicht nachteilig auswirken.

Alternativ zu der Ausgestaltung des elastischen Materials des Gegenwerkzeuges mit einem Mittel zur Veränderung der Elastizität, zum Beispiel einer Rippe oder einem Keil, ist es aber auch möglich, die der Folie zugewandte Fläche des Gegenwerkzeuges eben oder sphärisch, zum Beispiel als Teil einer Zylindermantelfläche oder dergleichen auszugestalten. Insbesondere die glatte, ebene Ausgestaltung ergibt ebenfalls den erfindungsgemäßen Effekt, wobei dann zum Beispiel mit einer entsprechenden Ansteuerung der Heizleiste das Verschweißen oder Trennschweißen erreicht wird. Die Verwendung eines Mittels zur Veränderung der Elastizität, wie zum Beispiel einer Einlage, einer Rippe oder dergleichen (wie noch beschrieben) erhöht aber den mechanischen Druck in diesem Bereich und ergibt unter Umständen eine schnellere Bearbeitung und dient dabei auch zu einer Erhöhung der Taktzahl.

Die Erfindung schlägt für die Ausgestaltung des Gegenwerkzeuges (zum Beispiel für die Leiste) elastisches Material vor. Bevorzugt wird hierzu zum Beispiel Elastomere, Kautschuk, Gummi oder Silikon-Kautschuk oder dergleichen eingesetzt. Elastomere sind hierbei Polymere mit gummielastischen Verhalten, die bei Raumtemperatur wiederholt gedehnt werden und sich nach Aufheben wieder annähernd auf ihre Ausgangslänge zurückziehen. Auf einen spezielle Elastomer ist dabei nicht abzustellen, es können hierbei alle im Bereich der Technik bekannten Elastomere, zum Beispiel Kautschuk basierend auf Polyester-Urethan, Ethylen-Acrylat, Ethylen-Propylen-Copolimere und so weiter Verwendung finden. Auf die günstigen, thermischen Eigenschaften von Silikon-Kautschuk (zum Beispiel FVMQ - Fluorsilikon-Kautschuk) wurde bereits eingegangen. Es ist aber auch möglich, neben den synthetisch hergestellten Materialien, auf Naturprodukte wie Kautschuk oder Gummi zurückzugreifen, die gegebenenfalls mit einem wärmeverträglichen Material verblendet werden und ein elastisches Lager ergeben. Kunststoffe anderer chemischer Zusammensetzung, die hinreichend elastisch sind und den angewandten Temperaturen standhalten, sind ebenfalls brauchbar.

Diejenigen Bereiche der Leiste, die dem Festklemmen dienen, sind gegenüber den anderen Bereichen, die der Verschweißung oder der Versiegelung dienen, so ausgebildet und angeordnet, daß sie etwa um 0,2 mm bis 1,5 mm gegenüber den Bereichen der Verschweißung oder Versiegelung vorstehen.

Ein ähnliches Zusammenwirken läßt sich auch erreichen, wenn beispielsweise im Bereich der Heizeinrichtung ein entsprechendes Profil vorgesehen wird, das sicherstellt, daß bei der Bewegung des Gegenwerkzeuges ausreichend vor dem Zeitpunkt der Verschweißung oder Versiegelung der Klemmvorgang zustandekommt. Entsprechendes gilt für die Anordnung und Ausbildung der Leiste, die der Abtrennung dient.

Der Bereich an der Leiste, der der Abtrennung dient, ist bei dem bewährten Ausführungsbeispiel so angeordnet, daß er etwa 0,4 mm bis 1,3 mm gegenüber den Bereichen für die Verschweißung oder Versiegelung vorsteht.

Die Erfindung kann in verschiedener Weise abgewandelt werden, beispielsweise ist es nicht unerläßlich notwendig, daß die Bereiche an der Leiste auch an der Oberfläche aus Silikon-Kautschuk bestehen. Es ist möglich, diese Bereiche ganz oder teilweise durch Auflagen zu bilden, die aus einem anderen Werkstoff, zum Beispiel aus Metall, bestehen. Diese Auflagen sind dann an der Leiste elastisch nachgiebig, zum Beispiel durch Federn oder dergleichen gelagert.

Es empfiehlt sich, das Gegenwerkzeug derart auszubilden, daß die Leiste aus elastischem Silikon-Kautschuk oder dergleichen auswechselbar an einem Träger gehalten ist. Durch eine solche Ausgestaltung ist es möglich, im Falle, daß das elastische Material verschlissen oder beschädigt ist, dieses in einfacher Weise zu wechseln.

Die Erfindung bezieht sich nicht nur auf die Vorrichtung, wie beschrieben, sondern erstreckt sich in gleicher Weise auf eine Banderoliermaschine, wobei eine Transporteinrichtung das zu banderolierende Gut gegen einen Folienvorhang schiebt, der sich um das Gut zu einer Schlinge formt, wobei eine Vorrichtung wie vorbeschrieben eingesetzt wird und die beheitzte Siegel- oder Schweißeinrichtung, die mit einem Gegenwerkzeug zusammenwirkt und hinter dem Gut die geformte Schlinge vom Folienvorhang abtrennt und die Folienenden der Schlinge und des Vorhanges verbindet.

Mit einer solchen Maschine werden sowohl das Trennen beziehungsweise das Trennschweißen und das Schweißen im Wesentlichen gleichzeitig durchgeführt. Bevorzugt wird hierbei das Gegenwerkzeug von einer profilierten Leiste aus elastischen Silikon-Kautschuk als elastisches Material gebildet, deren Vorderfläche, die der Folie zugewandt ist, entweder im Wesentlichen eben oder mit Bereichen zum Festklemmen beziehungsweise zum Schweißen oder abtrennen ausgebildet sind.

In der Zeichnung ist ein Ausführungsbeispiel der Erfindung schematisch dargestellt. Es zeigen:
- Fig. 1 bis 4: eine schematische Darstellung der wesentlichen Teile einer erfindungsgemäßen Banderoliermaschine in den verschiedenen Stellungen während eines Arbeitstaktes;
- Fig. 5: eine vergrößerte Darstellung einer Einzelheit der erfindungsgemäßen Vorrichtung und
- Fig. 6a bis 6i: je in einer Seitenansicht ein Detail des Gegenwerkzeuges der Vorrichtung.

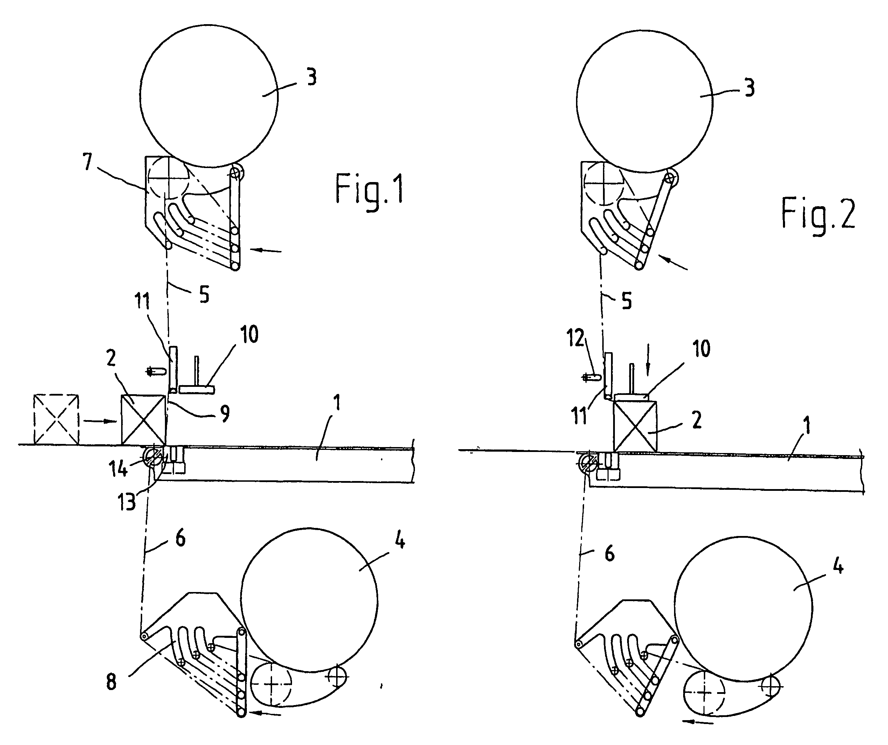

Die in den Fig. 1 bis 4 gezeigte Banderoliermaschine besteht im wesentlichen aus dem Tisch 1, auf dem das zu verpackende Gut 2 bewegt wird. Die Folien 5 und 6 laufen zum Teil von der oberen Rolle 3 und zum Teil von der unteren Rolle 4 ab, wobei die Folien 5, 6 zunächst über Speichereinrichtungen 7, 8 geführt sind, um den Folientransport den Bedürfnissen beim Banderolieren anzupassen. Die Folien 5 und 6 sind im Bereich des Verpackungsgutes 2 miteinander zu verschweißen, so daß ein Vorhang 9 entsteht, gegen den das Gut 2 geschoben wird. Dies ist in der Fig. 1 dargestellt.

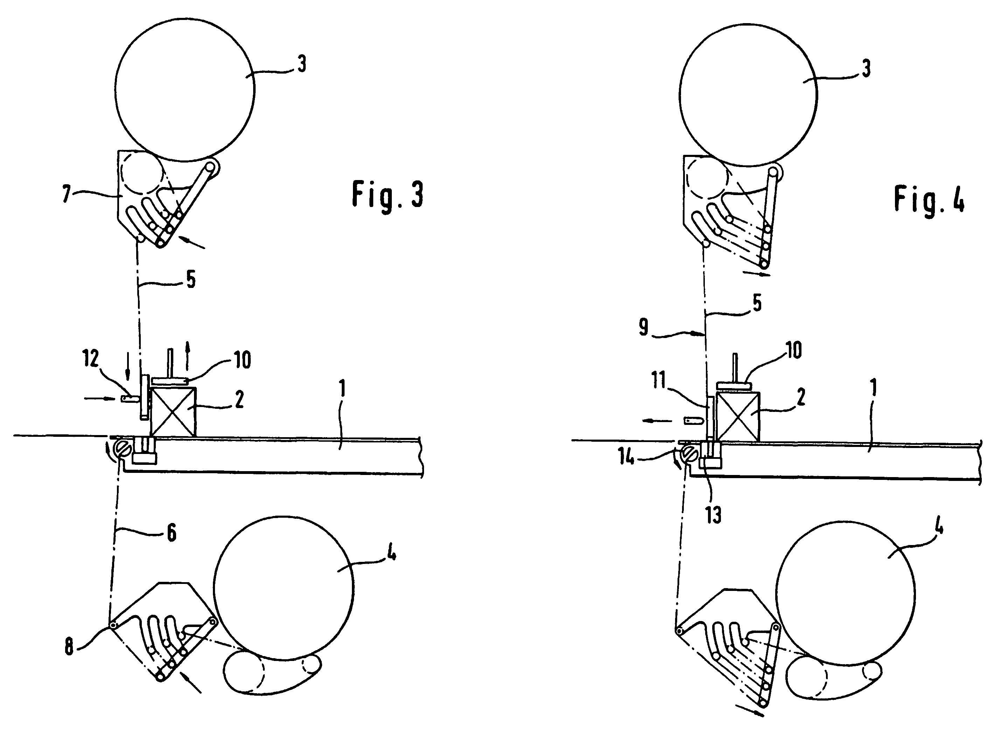

Nach dem Vorschub entsteht die Stellung nach der Fig. 2. Das Gut 2 ist auf drei Seiten von der Folie umhüllt. Ein stempelartiger Halter 10 hält das Gut und die Folie 5 fest. Das Gegenwerkzeug 11, das auch bei der Bewegung der Folie 5 mitwirkt, wird von oben nach unten geschoben, wie dies in der Fig. 3 angedeutet ist. Dabei kann zum Beispiel der Halter 10 kurzfristig angehoben werden, während die Klemme 12 mit dem Gegenwerkzeug 11 zusammenwirkt, um die das Gut 2 umgebende Schlinge zu spannen. Das Gegenwerkzeug 11 bewegt sich gegen die im Tisch 1 angeordnete beziehungsweise eingelassene Siegel- oder Schweißeinrichtung 13, bis die Stellung der Fig. 4 erreicht ist. Die Klemme 12 gibt die Folie 5 frei, während die Klemmeinrichtung 14, die von einer drehbaren Walze gebildet ist, eine Straffwirkung ausübt.

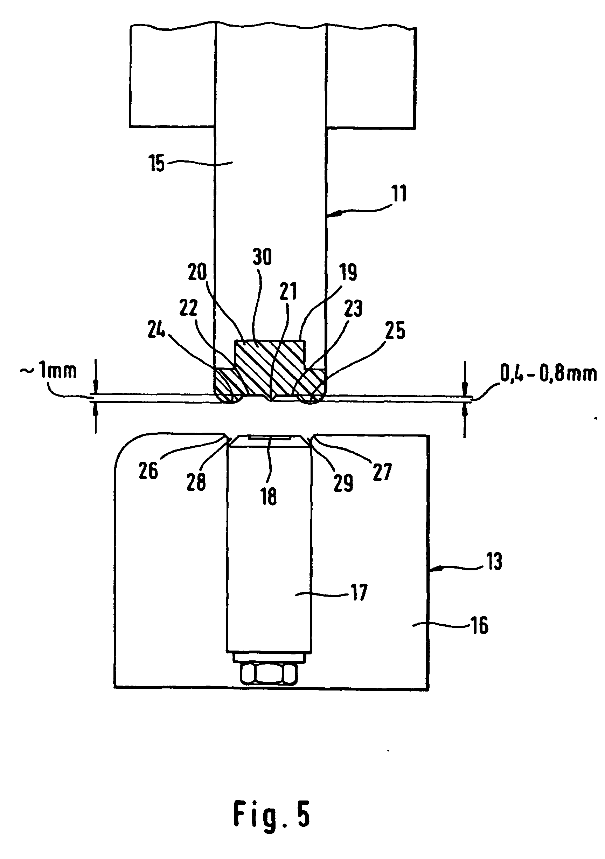

Die Fig. 5 zeigt das Gegenwerkzeug 11 und die Siegel- oder Schweißeinrichtung 13. Die Siegel- oder Schweißeinrichtung 13 besteht im wesentlichen aus einem mit dem Tisch 1 verbundenem Halter 16 für das Heizelement 17, dessen Einzelheiten nicht dargestellt sind. Es ist lediglich die beheizbare Leiste 18 gezeigt, die für jeden Schweiß- oder Banderoliervorgang kurzfristig erhitzt wird und dann wieder abkühlt.

Der Träger 15 des Gegenwerkzeuges 11 trägt in einer Ausnehmung 19 die Leiste 20 aus elastischen Material 30, die sich quer über die ganze Breite der Folien 5, 6 beziehungsweise des Folienvorhanges 9 erstreckt.

Auf der Vorderseite beziehungsweise Unterseite der Leiste 20 sind im wesentlichen fünf Bereiche vorgesehen und zwar eine mittlere keilartige Rippe 21, neben der sich die beiden Bereiche 22 und 23 erstrecken, die eben sind und der Versiegelung der Enden der Folienbahnen dienen. Die Bereiche 22 und 23 werden von den Wülsten 24 und 25 begrenzt. Die Wülste 24 und 25 stehen gegenüber den Bereichen 22 und 23 um etwa 1 mm vor, während die Höhe der Rippe 21 gegenüber den Bereichen 22 und 23 etwa 0,8 mm beträgt. Diese Maße sind in Grenzen variierbar. In der Fig. 5 sind die Folien nicht näher dargestellt.

Wenn sich nun das Gegenwerkzeug 11 nach unten bewegt, kommen die Wülste 24 und 25 zunächst mit den Kanten 26 und 27 des Halters 16 in Kontakt und klemmen die aufeinanderliegenden Folien fest. Die Wülste 24 und 25 können teilweise in die Ausnehmungen 28 und 29 eindringen. Da sich die Wülste verformen, drückt die Rippe 21 die beiden aufeinanderliegenden Folien, die von den Rollen 3 und 4 abgelaufen sind, gegen die Heizleiste 18. Wegen der Hitze der Heizleiste 18 werden die Folien durchtrennt. Unmittelbar anschließend, mit geringer zeitlicher Differenz oder gleichzeitig, werden aber die Folien durch die Bereiche 22 und 23 gegen die äußeren Bereiche der Heizleiste 18, die etwas kühler sind, gedrückt, so daß die aufeinanderliegenden Folien miteinander versiegelt oder verschweißt werden. Da sofort der Abkühlungsvorgang eintritt, und zwar wegen der geringen thermischen Trägheit, kann das Gegenwerkzeug 11 rasch zurückgezogen werden. Das umschlungene Gut 2 kann weitergefördert werden und durch die Verschweißung der Folien 5 und 6 im Bereich 22 zum Vorhang 9 kann das Arbeitsspiel fortgesetzt werden.

Alternativ zu der in Fig. 5 dargestellten Ausgestaltung ist es aber auch möglich, daß auf die Kanten 26, 27, sowie die Ausnehmungen 28, 29 in der Siegel- beziehungsweise Schweißeinrichtung 13 verzichtet wird. Die zusammenwirkenden Flächen des Gegenwerkzeuges 11 und der Siegel- beziehungsweise Schweißeinrichtung 13 sind dabei im Wesentlichen eben, wenn nicht sogar parallel. Sie können auch sphärisch, beziehungsweise gegensinnig sphärisch zueinander orientiert sein, wodurch sich beim Zusammenfahren dieser Elemente ein zusätzlicher Spanneffekt ergeben kann.

In Fig. 5 ist zu erkennen, daß die Siegel- beziehungsweise Schweißeinheit 13 eine Heizleiste trägt, die im Querschnitt gesehen im Verhältnis zur Breite eine geringe Dicke aufweist. Dadurch wird eine möglichst geringe thermische Trägheit erreicht, das heißt, die Masse oder das Material, welches zu erhitzen ist, wird gering gehalten. Die Heizleiste 18 besteht dabei zum Beispiel nur aus einem auf dem Heizelement 17 aufgebrachten dünnen Blech oder dergleichen. Es ist mit seinem Heizelement 17 zum Beispiel durch eine Klebung verbunden.

Es ist aber auch möglich das Heizelement auf der Oberfläche aufzudampfen.

Aus Fig. 5 ergibt sich auch, daß im Querschnitt gesehen die Breite der Heizleiste 18 geringer ist als die wirksame Breite des elastischen Materials 30 beziehungsweise der elastisch zurückweichenden Vorderfläche des Gegenwerkzeuges. Es ergibt sich, daß links und rechts neben der Heizleiste 18 ein Rand verbleibt, der mit entsprechenden Bereichen, wie in Fig. 5 gezeigt, den Wülsten 24, 25 zusammenwirkt, um eine Klemmung der Folie zu erreichen. Wie bereits erwähnt, kommt es aber auf den Einsatz dieser Wülste 24, 25 hierbei nicht an.

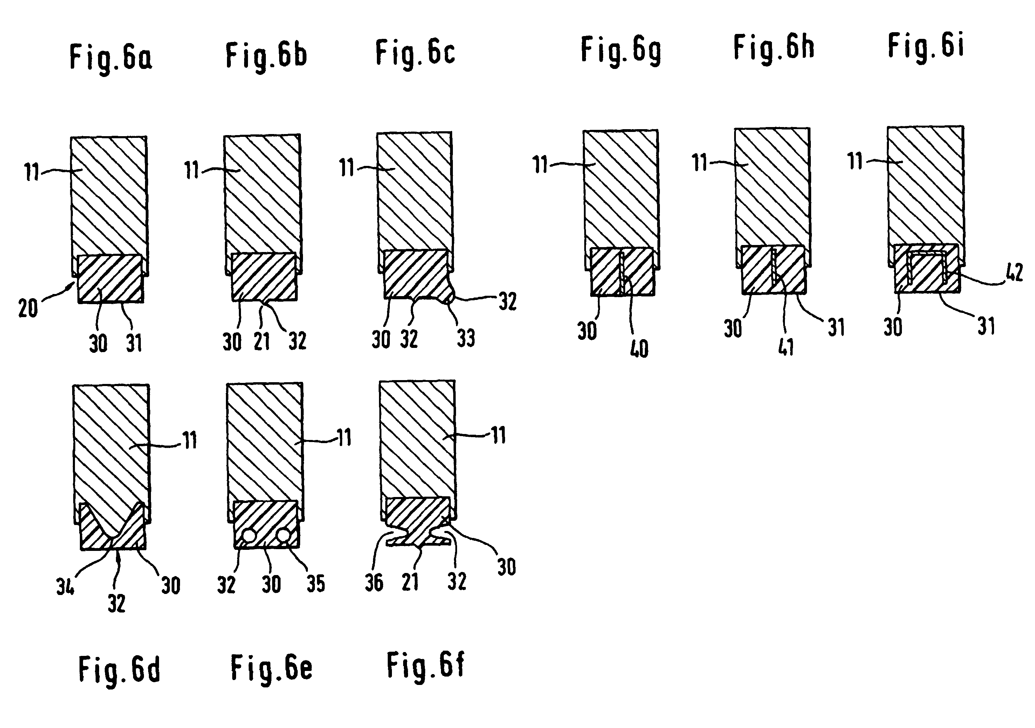

In den Fig. 6a bis 6i sind verschieden Ausgestaltungen des Gegenwerkzeuges 11 gezeigt. Die hier zwischen den Fig. 6a und 6i gezeigten Varianten unterscheiden sich im Hinblick auf die Ausgestaltung des elastischen Materiales 30. Die jeweiligen Darstellungen sind im Querschnitt dargestellt. In Fig. 6a ist gezeigt, daß der Effekt durch eine im Wesentlichen gerade Vorderfläche 31 des elastischen Materials 30 erreicht wird. Eine solche Ausgestaltung ist zum Beispiel dann von Vorteil, wenn nur eine Verschweißung und kein Trennschweißen erfolgen soll.

Für den Fall, daß ein Trennschweißen vorgesehen ist, wird zum Beispiel in Fig. 6b eine Rippe 21, mittig vorgesehen, die bereits als Mittel 32 zur Änderung der Elastizität des elastischen Materiales 30 dient.

In Fig. 6c ist ein weiteres Mittel 32 gezeigt. Neben der mittig angeordneten Rippe ist zum Beispiel eine leistenartige Wulst oder Schulter 33 seitlich vorgesehen, die über die Vorderfläche nach unten hervorsteht.

In Fig. 6d wird das Mittel 32 durch eine geringe Dicke 34 des elastischen Materiales erreicht. Im Schnitt gesehen weist das Gegenwerkzeug 11 hier einen keilartigen Vorsprung auf, der im vorderen Bereich zu einer geringen Dicke 34 führt und so die Elastizität mindert und die Steifheit erhöht.

In Fig. 6e ist das Mittel 32 durch zwei rohrartige, innenliegenden Ausnehmungen 35 erreicht, die zu einer Erhöhung der Elastizität in diesem Bereich beitragen. Im Ergebnis wird bei einer solchen Ausgestaltung von dem mittleren Bereich, welcher zwischen den beiden Ausnehmungen 35 angeordnet ist, eine größere Kraft übertragen werden. Ähnlich verhält es sich in der Ausgestaltung nach Fig. 6f, bei welcher eine seitliche Hinterschneidung 36 als Mittel 32 vorgesehen ist, wobei hier noch zusätzlich eine Spitze beziehungsweise Rippe 21 vorgesehen ist. Das Mittel 32 ist aber auch ohne diese Rippe 21 realisierbar.

In den Fig. 6g, 6h und 6i sind in dem elastischen Material 30 Einlagen 40, 41, 42 vorgesehen. Diese Einlagen sind zum Beispiel Metall-, Kunststoff- oder Holzprofile mit entsprechender geringer Elastizität, um den beschriebenen Effekt zu erreichen. Wird nun auf dieses Gegenwerkzeug eine Kraft ausgeübt, so wird die beaufschlagte Fläche im Bereich der Einlage nicht so weit zurückweichen können, da die Elastizität in diesem Bereich fehlt. Die übertragene Kraft beziehungsweise der herrschende Druck in diesem Bereich wird größer sein, wie in benachbarten, unbeschwerten Bereichen.

Die Lösung nach Fig. 6g zeigt eine leistenartige Profileinlage 40, deren unteres Ende an der Vorderkante 31 angeordnet ist und die Stärke des Materiales 30 fast komplett durchdringt. Es besteht nur ein geringer Bereich, wo elastisches Material die Einlage 40 hinterfüttert und so eine gewisse Elastizität zur Verfügung stellt.

Nach der Lösung von Fig. 6h ist die Einlage 41, die ebenfalls stabförmig ausgebildet ist, sowohl hinten wie auch vorne (im Bezug auf die Vorderfläche 31) von elastischen Material 30 umgeben.

Nach der Lösung nach Fig. 6i ist ein U-förmiges Einlageprofil 42 vorgesehen, welches die Vorderfläche 31 in insgesamt fünf verschiedene Sektoren mit Elastizität unterteilt. Davon sind zwei Bereiche, nämlich die unterhalb der Stege angeordneten Bereich mit geringerer Elastizität, sowie die seitlich daneben und dazwischenliegenden Bereiche mit höherer Elastizität ausgestattet.

Die Verwendung der Einlagen 40, 41, 42 ist auf die hier dargestellte Profilform nicht beschränkt, es können alle beliebigen Profile Verwendung finden.

## Patentansprüche

1. Vorrichtung zum Schweißen zweier Folien oder Folienstücke, mit einer beheizten Siegel- oder Schweißeinrichtung (13), die mit einem Gegenwerkzeug (11) zusammenwirkt, wobei die Folien zwischen der Siegel- oder Schweißeinrichtung (13) und dem Gegenwerkzeug (11) angeordnet sind und die Siegel- oder Schweißeinrichtung (13) und das Gegenwerkzeug (11) zueinander relativ beweglich ausgebildet sind, wobei das Gegenwerkzeug (11) an der der Folie zugewandten Vorderseite elastisches Material (30) aufweist und/oder die der Folie (5, 6) zugewandte Vorderfläche (31) des Gegenwerkzeuges (11) elastisch ausgebildet ist, und das elastische Material (30) beziehungsweise die Vorderfläche beim Zusammenfahren von Siegel- oder Schweißeinrichtung (13) und Gegenwerkzeug (11) zumindest teilweise elastisch zurückzuweichen, wobei das Gegenwerkzeug (11) wenigstens ein Mittel (32) aufweist, durch das sich örtlich der Grad der Elastizität des Gegenwerkzeuges (11) und/oder der Vorderfläche (31) verändert, **dadurch gekennzeichnet, daß** beidseitig seitlich neben dem oder den Mitteln (32) Bereiche (22, 23) vorgesehen sind, die der Verschweißung der Folien (5, 6) dienen und neben diesen Bereichen vorstehende Wülste (24, 25) angeordnet sind, derart, daß sie die Folien (5, 6) im Zusammenwirken mit der Siegel- oder Schweißeinrichtung (13) festklemmen.

2. Vorrichtung nach Anspruch 1, **dadurch gekennzeichnet, daß** die im beziehungsweise am Gegenwerkzeug (11) vorgesehenen Mittel (32) im Querschnitt gesehen derart ausgebildet sind, daß sie die Folie durchtrennen.

3. Vorrichtung nach einem oder beiden der vorhergehenden Ansprüche, **dadurch gekennzeichnet, daß** durch das Gegenwerkzeug (11) der Grad der Elastizität insbesondere erniedrigt wird, derart, daß dieser Bereich beim Zusammenführen von Siegel- oder Schweißeinrichtung (13) und Gegenwerkzeug (11) einen erhöhten Druck auf die Folie ausübt.

4. Vorrichtung nach einem oder mehreren der vorhergehenden Ansprüche, **dadurch gekennzeichnet, daß** das Gegenwerkzeug (11) leistenartig ausgebildet ist und die Mittel (32) zur Veränderung der Elastizität längs der Leiste (20) angeordnet sind.

5. Vorrichtung nach einem oder mehreren der vorhergehenden Ansprüche, **dadurch gekennzeichnet, daß** die Mittel (32) zur Veränderung der Elastizität als Ausnehmung, seitliche Hinterschneidung (36) oder rohrartige, innenliegende Ausnehmung (35) in beziehungsweise an dem Gegenwerkzeug (11) beziehungsweise elastischen Materials (30) ausgebildet sind und/oder daß die Mittel (32) zur Veränderung der Elastizität als im Querschnitt des Gegenwerkzeuges (11) rippenartige oder keilartige Leiste (21) oder Wulst (24, 25, 33) ausgebildet sind und/oder daß die Mittel (32) zur Veränderung der Elastizität als im elastischen Material des Gegenwerkzeuges (11) eingebettete Einlage (40, 41, 42) geringerer Elastizität, wie zum Beispiel eine Metalleiste oder dergleichen, ausgebildet sind und/oder daß das Gegenwerkzeug (11) einen Gegenwerkzeugträger (15) aufweist, der an seinem vorderen Ende das elastische Material (30) trägt, wobei der Gegenwerkzeugträger (15) unterhalb des elastischen Materiales (30) vorgesehen ist, derart, daß das elastische Material nicht überall die gleiche Dicke (34) aufweist und so ein Mittel zur Veränderung der Elastizität bildet.

6. Vorrichtung nach einem oder mehreren der vorhergehenden Ansprüche, **dadurch gekennzeichnet, daß** die Siegel- oder Schweißeinrichtung (13) der Form des Gegenwerkzeuges (11) angepaßt ist.

7. Vorrichtung nach einem oder mehreren der vorhergehenden Ansprüche, **dadurch gekennzeichnet, daß** die Siegel- und Schweißeinheit (13) einen Träger (16) aufweist, welcher die Heizleiste (18) trägt und die Heizleiste (18) im Querschnitt im Verhältnis zur Breite eine geringe Dicke aufweist und/oder an dem Träger (16) eine Kühlung, insbesondere eine Wasserkühlung für die Heizleiste vorgesehen ist.

8. Vorrichtung nach Anspruch 7, **dadurch gekennzeichnet, daß** die Heizleiste (18) eine geringe thermische Trägheit aufweist und/oder daß die Heizleiste (18) durch einen Stromimpuls von bis zu 0,4 sec., bevorzugt ca. 0,05 bis 0,15 sec., auf Bearbeitungstemperatur aufgeheizt wird.

9. Vorrichtung nach einem oder beiden der vorhergehenden Ansprüche 7 und 8, **dadurch gekennzeichnet, daß** im Querschnitt gesehen die Breite der Heizleiste (18) geringer ist, als die wirksame Breite des elastischen Materials (30) beziehungsweise der elastisch zurückweichenden Vorderfläche (31) des Gegenwerkzeuges.

10. Vorrichtung nach einem oder mehreren der vorhergehenden Ansprüche 7 bis 9, **dadurch gekennzeichnet, daß** das Gegenwerkzeug (11) die zu verschweißenden Folien (5, 6) in den Bereichen neben dem Heizleiter (18) anschließenden Flächen klemmt, während der Heizleiter (18) mit Heizstrom beaufschlagt wird.

11. Vorrichtung nach einem oder mehreren der vorhergehenden Ansprüche, **dadurch gekennzeichnet, daß** das Gegenwerkzeug (11) sowohl zum Schweißen und/oder zum Trennschweißen dient, wobei insbesondere in dem Bereich mit verringerter Elastizität neben einem Schweißen auch ein Trennschweißen möglich ist.

12. Vorrichtung nach einem oder mehreren der vorhergehenden Ansprüche, **dadurch gekennzeichnet, daß** das elastische Material als Elastomere, Kautschuk, Gummi oder Silikon-kautschuk oder dergleichen ausgebildet ist.

13. Vorrichtung nach einem oder mehreren der vorhergehenden Ansprüche, **dadurch gekennzeichnet, daß** die Siegel- oder Schweißeinrichtung (13) antriebslos angeordnet ist und nur das Gegenwerkzeug (11) gegen die Siegel- oder Schweißeinrichtung (13) geführt ist.

14. Vorrichtung nach einem oder mehreren der vorhergehenden Ansprüche, **dadurch gekennzeichnet, daß** die Konturen der Vorderfläche des Gegenwerkzeugs (11) und der Vorderfläche der Siegel- oder Schweißeinrichtung (13) einander derart angepaßt sind, daß die Bereiche (24, 25) zum Festklemmen, gegenüber den anderen Bereichen (21, 22, 23), derart vorstehen, daß diese Bereiche (24, 25) vor den anderen Bereichen (21, 22, 23) wirksam sind.

15. Vorrichtung nach einem oder mehreren der vorhergehenden Ansprüche, **dadurch gekennzeichnet, daß** der Bereich des Gegenwerkzeuges (11) mit dem Mittel (32) zur Veränderung der Elastizität zuerst mit der beheizten Siegel- oder Schweißvorrichtung (13) in Kontakt kommt und die Folien (5, 6) durchtrennt.

16. Vorrichtung nach einem oder mehreren der vorhergehenden Ansprüche, **dadurch gekennzeichnet, daß** das elastische Material auswechselbar an einem Träger (15) gehalten ist.

17. Vorrichtung nach einem oder mehreren der vorhergehenden Ansprüche 4 bis 16, **dadurch gekennzeichnet, daß** die Bereiche (24, 25) an der Leiste (20), die dem Festklemmen dienen, gegenüber den Bereichen (22, 23), die der Verschweißung oder Versiegelung dienen, um 0,2 mm bis 1,5 mm, bevorzugt ca. 0,4 mm bis 1,0 mm, vorstehen und/oder der Bereich (21) an der Leiste (20), der der Abtrennung dient, etwa nur 0,4 mm bis 1,3 mm gegenüber den Bereichen (22, 23) für die Verschweißung oder Versiegelung vorsteht.

18. Vorrichtung nach einem oder mehreren der vorhergehenden Ansprüche, **dadurch gekennzeichnet, daß** die Siegel- oder Schweißvorrichtung (13) Ausnehmungen (28, 29) aufweist, die mit den Bereichen (24, 25) zur Klemmung am Gegenwerkzeug (11) zusammenwirken, diesen jedoch nur teilweise angepaßt sind.

19. Vorrichtung nach einem oder mehreren der vorhergehenden Ansprüche 4 bis 18, **dadurch gekennzeichnet, daß** die Bereiche (21 bis 25) an der Leiste (20) ganz oder teilweise aus Auflagen aus einem anderen Werkstoff, zum Beispiel aus Metall bestehen, wobei die Auflagen an der Leiste elastisch, nachgiebig gelagert sind.

20. Banderoliermaschine mit einer Vorrichtung nach einem oder mehreren der vorhergehenden Ansprüche, wobei eine Transporteinrichtung das zu banderolierende Gut gegen einen Folienvorhang schiebt, der sich um das Gut zu einer Schlinge formt, mit einer beheizten Siegel- oder Schweißeinrichtung, die mit einem Gegenwerkzeug zusammenwirkt und die hinter dem Gut die Schlinge vom Folienvorhang abtrennt und die Folienenden der Schlinge und des Vorhanges verbindet.

## Claims

1. Device for welding two films or film parts with a heated sealing or welding arrangement (13) which interacts with an opposed tool (11), the films being arranged between the sealing or welding arrangement and the opposed tool (11), and the sealing or welding arrangement (13) and the opposed tool (11) being designed movably relative to each other, the opposed tool (11) having elastic material (30) on the front face facing the film, and/or the front face (31) of the opposed tool (11) facing the film (5,6) being designed elastically, and the elastic material (30), respectively the front faces, yield at least partially elastically when the sealing or welding arrangement (13) and the opposed tool (11) approach each other, the opposed tool (11) having at least one means (32) through which the degree of elasticity of the opposed tool (11) and/or the front face (31) changes locally, **characterized in that** on both sides laterally beside the means (32) regions (22, 23) are provided which serve for welding the films (5, 6), and beside these regions projecting beads (24, 25) are arranged in such a way that they clamp the films (5, 6) in interaction with the sealing or welding arrangement (13).

2. Device according to claim 1, **characterized in that** the means (32) provided in, respectively on, the opposed tool (11) seen in cross section are designed in such a way that they sever the film.

3. Device according to one or both of the preceding claims, **characterized in that** the degree of elasticity is in particularly lowered by the opposed tool (11) in such a way that this region exerts increased pressure on the film when sealing or welding arrangement (13) and opposed tool (11) approach each other.

4. Device according to one or more of the preceding claims, **characterized in that** the opposed tool (11) is designed rail-like, and the means (32) for changing the elasticity are arranged along the rail (20).

5. Device according to one or more of the preceding claims, **characterized in that** the means (32) for changing the elasticity are designed as recess, lateral undercut (36) or tube-like, interior recess (35) in, respectively on, the opposed tool (11), respectively the elastic material (30), and/or the means (32) for changing the elasticity are designed in cross section of the opposed tool (11) as rib-like or wedge-like rail (21) or bead (24, 25, 33), and/or that the means (32) for changing the elasticity are designed as inset (40, 41, 42) with less elasticity, as for example a metal rail or the like, imbedded in the elastic material of the opposed tool (11), and/or the opposed tool (11) has a carrier (15) for the opposed tool which carries on its front end the elastic material (30), the carrier (15) for the opposed tool being provided below the elastic material (30) in such a way that the elastic material does not have the same overall thickness (34), and thus forms a means for changing the elasticity.

6. Device according to one or more of the preceding claims, **characterized in that** the sealing or welding arrangement (13) is adapted to the shape of the opposed tool (11).

7. Device according to one or more of the preceding claims, **characterized in that** the sealing or welding arrangement (13) has a carrier (16) which carries the heating rail (18), and the thickness of the heating rail (18) is, in cross section, less compared with its width, and /or on the carrier (16) a cooling system, in particular a water cooling system, is provided for the heating rail.

8. Device according to claims 7, **characterized in that** the heating rail (18) has low thermal inertia, and/or the heating rail (18) is heated to working temperature by a current pulse of up to 0.4 sec., preferably 0.05 to 0.15 sec.

9. Device according to one or both of the preceding claims 7 and 8, **characterized in that** seen in cross section, the width of the heating rail (18) is less than the effective width of the elastic material (30), respectively of the elastically yielding front face (31) of the opposed tool.

10. Device according to one or more of the preceding claims 7 to 9, **characterized in that** the opposed tool (11) clamps the films (5, 6) which have to be welded in the regions adjacent to the faces beside the heating rail (18) while the heating rail (18) is charged with heating current.

11. Device according to one or more of the preceding claims, **characterized in that** the opposed tool (11) serves for welding and/or combined cutting and welding, wherein in particular in the region with reduced elasticity beside welding also combined cutting and welding is possible.

12. Device according to one or more of the preceding claims, **characterized in that** the elastic material is made from either elastomer or caoutchouc or rubber or silicone rubber or the like.

13. Device according to one or more of the preceding claims, **characterized in that** the sealing or welding arrangement (13) is arranged without a drive, and only the opposed tool (11) is moved against the sealing or welding arrangement (13).

14. Device according to one or more of the preceding claims, **characterized in that** the shape of the front face of the opposed tool (11) and the front face of the sealing or welding arrangement (13) are adapted to each other to such an extent that the regions (24, 25) for clamping project versus the other regions (21, 22, 23) in such a way that these regions (24, 25) are effective before the other regions (21, 22, 23).

15. Device according to one or more of the preceding claims, **characterized in that** the region of the opposed tool (11) with the means (32) for changing the elasticity comes into contact at first with the heated sealing or welding arrangement (13), and severs the films (5, 6).

16. Device according to one or more of the preceding claims, **characterized in that** the elastic material is held at a carrier (15) in an exchangeable way.

17. Device according to one or more of the preceding claims 4 to 16, **characterized in that** the regions (24, 25) on the rail (20) which serve for clamping project versus the regions (22, 23) which serve for welding or sealing, by 0.2 mm to 1.5 mm, preferably about 0.4 mm to 1.0 mm, and /or the region (21) on the rail (20) which serves for severing projects only by about 0.4 mm to 1.3 mm versus the regions (22, 23) for welding or sealing.

18. Device according to one or more of the preceding claims, **characterized in that** the sealing or welding arrangement (13) has recesses (28, 29) which interact for clamping on the opposed tool (11), however, are only adapted partially.

19. Device according to one or more of the preceding claims 4 to 18, **characterized in that** the regions (21 to 25) on the rail (20) consist completely or partially of supports made of another material, for example metal, the supports being supported on the rail elastically, flexibly.

20. Bandolier machine with a device according to one or more of the preceding claims, a conveying device pushing the good to be wrapped against a film curtain, which forms a loop around the good, with a heated sealing or welding arrangement which interacts with an opposed tool, and which severs the loop from the film curtain behind the good, and connects the film ends of the loop and the curtain.

## Revendications

1. Dispositif de soudage de deux films ou morceaux de films, utilisant un dispositif chauffant de fermeture ou de soudage (13), agissant sur un contre-outil (11) en ayant placé les films entre le dispositif de fermeture ou de soudage (13) et le contre-outil (11), ces derniers étant fixés ensemble et mobiles l'un par rapport à l'autre, le contre-outil (11) comportant un matériau élastique (30) du côté du film et/ou de sa face frontale (31) située du côté du film (5,6) et fabriquée en un matériau élastique, permettant à l'un ou l'autre de reculer de façon élastique lorsque le dispositif de fermeture ou de soudage (13) s'approche du contre-outil (11), ce dernier possédant au moins un moyen (32) permettant de modifier le degré d'élasticité du contre-outil (11) et/ou de sa face frontale (31), **caractérisé en ce que** des zones (22, 23) situées latéralement, et de part et d'autre du ou des moyens (32) servent au soudage des films (5,6) et **en ce que** des renflements (24, 25) sont prévus à côté de ces zones et maintiennent les films en les pinçant lors de l'interaction avec le dispositif de fermeture ou de soudage (13).

2. Dispositif selon la revendication 1, **caractérisé en ce que** les moyens (32), situés au niveau du contre-outil (11), possèdent une forme permettant de sectionner le film.

3. Dispositif selon une ou deux des revendications précédentes, **caractérisé en ce que** la configuration du contre-outil (11) modifie, et en particulier, réduit localement l'élasticité de façon à augmenter la pression exercée sur le film dans cette zone lors du rapprochement du dispositif de fermeture ou de soudage (13) et du contre-outil (11).

4. Dispositif selon une ou plusieurs des revendications précédentes, **caractérisé en ce que** le contre-outil (11) possède une forme de languette et **en ce que** les moyens (32) modifiant localement l'élasticité sont situés le long de cette languette (20).

5. Dispositif selon une ou plusieurs des revendications précédentes, **caractérisé en ce que** les moyens (32) modifiant localement l'élasticité possèdent des formes d'évidement, par exemple des découpes arrières latérales (36) ou des évidements en forme de canaux intérieurs (35) situés au niveau du contre-outil (11) et plus précisément au niveau du matériau élastique (30) et/ou **en ce que** ces moyens (32) modifiant l'élasticité possèdent des languettes (21) dont la section au niveau du contre-outil (11) possède une forme trapézoïde, conique ou arrondie (24, 25, 33) et/ou **en ce que** les moyens (32) modifiant l'élasticité sont des inclusions à élasticité réduite (40, 41, 42) comme des languettes métalliques, encastrées dans le matériau élastique du contre-outil (11) et/ou **en ce que** le contre-outil (11) possède un support (15) dont l'extrémité frontale porte le matériau élastique (30) de façon à ce que ce matériau ait une épaisseur non uniforme (34), permettant ainsi de modifier localement son élasticité.

6. Dispositif selon une ou plusieurs des revendications précédentes, **caractérisé en ce que** le dispositif de fermeture ou de soudage (13) épouse la forme du contre-outil (11).

7. Dispositif selon une ou plusieurs des revendications précédentes, **caractérisé en ce que** l'unité de fermeture ou de soudage (13) comporte un support (16) maintenant la languette chauffante (18) dont l'épaisseur est inférieure à sa largeur et/ou **en ce que** le support (16) possède un élément réfrigérant et en particulier un système de refroidissement à eau destiné à refroidir la languette chauffante.

8. Dispositif selon la revendication 7, **caractérisé en ce que** la languette chauffante (18) possède une capacité thermique faible et/ou **en ce que** la languette chauffante (18) est chauffée par une impulsion de courant d'une durée allant jusqu'à 0,4 sec et variant de préférence entre 0,05 sec et 0,15 sec.

9. Dispositif selon une ou deux des revendications 7 et 8, **caractérisé en ce que** l'épaisseur de la languette chauffante (18) est inférieure à la dimension utile du matériau élastique (30) ou à celle de la face frontale (31) du contre-outil cédant aux forces de façon élastique.

10. Dispositif selon une ou plusieurs des revendications 7 à 9, **caractérisé en ce que** le contre-outil (11) pince les films à souder (5, 6) au niveau des zones au voisinage du conducteur chauffant (18) au moment où ce dernier est chauffé par un courant appliqué.

11. Dispositif selon une ou plusieurs des revendications précédentes, **caractérisé en ce que** le contre-outil (11) sert aussi bien pour le soudage que pour le découpage, ce dernier étant en particulier possible dans la zone à élasticité réduite.

12. Dispositif selon une ou plusieurs des revendications précédentes, **caractérisé en ce que** le matériau élastique est formé d'élastomère, de caoutchouc, de gomme, de silicone ou d'un autre matériau similaire.

13. Dispositif selon une ou plusieurs des revendications précédentes, **caractérisé en ce que** le dispositif de fermeture ou de soudage (13) ne possède pas de commandes mais, **en ce que** seul le contre-outil (11) est actionné et se déplace vers le dispositif de fermeture ou de soudage (13).

14. Dispositif selon une ou plusieurs des revendications précédentes, **caractérisé en ce que** les limites des surfaces du contre-outil (11) et du dispositif de fermeture ou de soudage (13) sont ajustées les unes par rapport aux autres de façon à ce que les zones de pincement (24, 25) dépassent les autres zones (21, 22, 23) et rentrent ainsi en contact avant ces dernières lors de la fermeture du dispositif.

15. Dispositif selon une ou plusieurs des revendications précédentes, **caractérisé en ce que** la zone du contre-outil (11), portant le moyen (32) permettant de modifier localement l'élasticité, rentre la première en contact avec le dispositif de fermeture ou de soudage chauffé (13) et sectionne les films (5, 6).

16. Dispositif selon une ou plusieurs des revendications précédentes, **caractérisé en ce que** le matériau élastique est fixé à un support (15) de manière amovible.

17. Dispositif selon une ou plusieurs des revendications 4 à 16, **caractérisé en ce que** les zones (24, 25) de la languette (20) servant à pincer les films dépassent de 0,2 à 1,5 mm et de préférence de 0,4 à 1,3 mm des zones (22, 23) de soudage et de fermeture et/ou **en ce que** la zone (21) de la languette (20) servant au sectionnement ne dépasse que de 0,4 à 1,3 mm des zones (22, 23) de soudage et de fermeture.

18. Dispositif selon une ou plusieurs des revendications précédentes, **caractérisé en ce que** le dispositif de fermeture ou de soudage (13) possède des évidements (28, 29) pinçant avec les zones (24, 25) du contre-outil (11) les films mais n'épousant que partiellement leurs formes.

19. Dispositif selon une ou plusieurs des revendications précédentes, **caractérisé en ce que** les zones (21 à 25) de la languette (20) consistent complètement ou partiellement en des lames d'un matériau différent, par exemple en métal, et **en ce que** ces lames cèdent aux forces puisqu'elles sont fixées sur le matériau élastique.

20. Machine d'emballage, comportant un dispositif selon une ou plusieurs des revendications précédentes, un système de transport acheminant les objets à enrouler contre un film tendu comme un store et qui épouse la forme de l'objet lors de son avancement, et un dispositif chauffé de fermeture ou de soudage, interagissant avec un contre-outil de façon à couper la boucle après le passage de l'objet du film en soudant les extrémités de la boucle ensemble ainsi que le film qui forme de nouveau un store.
